# EUROPÄISCHE PATENTSCHRIFT

(11) **EP 2 954 010 B1**
(45) Veröffentlichungstag und Bekanntmachung des Hinweises auf die Patenterteilung: **18.07.2018**
(21) Anmeldenummer: 14702287.5
(22) Anmeldetag: 04.02.2014
(51) Int. Cl.: C09C 3/08, C09C 3/12, C09C 1/30, B01J 13/00, C01B 33/159, C09C 1/36, C09C 1/40, C09C 1/04

(54) **VERFAHREN ZUR HERSTELLUNG VON PORÖSEN ODER FEINTEILIGEN, FESTEN ANORGANISCHEN MATERIALIEN**
METHOD FOR PRODUCING POROUS OR FINE-PARTICLE SOLID INORGANIC MATERIALS
PROCÉDÉ DE PRODUCTION DE MATÉRIAUX INORGANIQUES SOLIDES POREUX OU EN FINES PARTICULES

(30) Priorität: 05.02.2013 EP 13154056; 05.02.2013 EP 13154051; 05.02.2013 EP 13154053
(43) Veröffentlichungstag der Anmeldung: 16.12.2015
(73) Patentinhaber: BASF SE, 67056 Ludwigshafen am Rhein (DE)
(72) Erfinder: SZEIFERT, Johann Martin, 68163 Mannheim (DE); KUTSCHERA, Michael, 67434 Neustadt (DE)
(74) Vertreter: Reitstötter Kinzebach
(86) Internationale Anmeldenummer: PCT/EP2014/052123
(87) Internationale Veröffentlichungsnummer: WO 2014/122115

(56) Entgegenhaltungen:
- EP-A1- 0 653 377
- WO-A1-01/52981
- WO-A1-95/06617
- DE-A1- 19 541 992
- DE-A1- 19 810 565
- JP-A- H10 236 817
- JP-A- 2007 099 607
- KR-A- 20120 115 068
- US-A1- 2007 134 437

## Beschreibung

Die vorliegende Erfindung betrifft ein Verfahren zur Herstellung von porösen oder feinteiligen, festen anorganischen Materialien, deren Oberfläche mit wenigstens einer organischen Substanz modifiziert ist.

Poröse oxidische Materialien sind für zahlreiche Anwendungen von Interesse, beispielsweise als Adsorbentien, Füllstoffe, Trennmittel, Verdicker, Dispergierhilfsmittel, Rieselhilfsmittel, Entschäumer, Mattierungsadditive, Wirkstoffträger und/oder Katalysatorträger. Bei den porösen, festen oxidischen Materialien ist insbesondere die Klasse der Aerogele von Bedeutung. Bei Aerogelen handelt es sich um poröse, feste oxidische Materialien, die im Allgemeinen aus Siliciumoxiden, d. h. Kieselsäure, oder Metalloxiden bestehen. Aerogele, insbesondere Aerogele der Kieselsäure, eignen sich aufgrund ihrer nur geringen Wärmeleitfähigkeit hervorragend als thermisches Isoliermaterial oder aufgrund ihrer großen spezifischen Oberfläche als Trägermaterial für Katalysatoren. Weitere Einsatzgebiete von Aerogelen sind auf den Gebieten der Kunststoffe, z. B. natürliche und künstliche Kautschuke, Klebstoffe, Farben, Lacke, Pharmazie, Kosmetik, Papier-, Textil-, Mineralöl- und Faserindustrie sowie Glas-, Pyro- und Gießereitechnik, wo die Aerogele vielfältige Verwendung als Dispergierhilfsmittel, Verstärker, Rieselhilfsmittel, Schwebemittel, Füllstoffe, Entschäumer, Mattierungsadditive, Wirkstoffträger und/oder Absorbentien finden.

Feinteilige, feste anorganische Materialien sind vor allem aufgrund ihrer Morphologie, also ihrer räumlichen Struktur, für zahlreiche Anwendungen interessant, z. B. als Katalysatorträgermaterialien, in Brennstoffzellen, als Gasspeichermaterialien, zur Wirk- und Effektstofffreisetzung, in Filtersystemen, in der Textilindustrie und in der Elektronikindustrie. Feinteilige, feste anorganische Materialien können beispielsweise in Form von feinteiligen anorganischen Gebilden vorliegen. Hierbei handelt es sich in der Regel um Gebilde mit räumlichen Abmessungen auf der Nanometer- bzw. Mikrometerskala wie beispielsweise feinteilige Hohlkugeln, Fasern, Plättchen oder Agglomerate von Primärpartikeln mit Abmessungen im Nanometerbereich. So kann man beispielsweise Moleküle in Nanohohlkugeln einlagern oder Nanofasern als elektrische Leiter in der molekularen Elektronik verwenden. Eine weitere interessante Eigenschaft feinteiliger anorganischer Gebilde ist ihre große spezifische Oberfläche. Hierdurch können Wechselwirkungen mit der umgebenden Phase verstärkt werden, so dass beispielsweise Katalyse- und/oder Adsorptionsprozesse schneller ablaufen können.

Poröse oder feinteilige, feste anorganische Materialien, deren Oberflächen mit wenigstens einer organischen Substanz modifiziert sind, lassen sich nach unterschiedlichen Verfahren herstellen. Diese Verfahren weisen als Gemeinsamkeit auf, dass die Modifizierung mit wenigstens einer reaktiven organischen Substanz eine Behandlung des porösen oder feinteiligen, festen anorganischen Materials mit einer reaktiven Substanz unter überkritischen Bedingungen umfasst.

Die Herstellung von porösen, festen oxidischen Materialien, z. B. Aerogelen, die mit dem erfindungsgemäßen Verfahren oberflächenmodifiziert werden können, gelingt in der Regel durch Entwässern hydratisierter Formen der oxidischen Materialien, sogenannter Hydrogele. Dieses Entwässern ist jedoch mit einer Reihe von Problemen verbunden. Das Entfernen des Wassers aus dem Hydrogel durch einfaches Erhitzen kann zum Kollabieren des Hydrogels oder zur Kristallisation des oxidischen Materials führen, so dass das erhaltene oxidische Material kompakt ist und keine oder nur eine geringe Porosität aufweist. Um diese Probleme zu vermeiden, kann man das Hydrogel in situ generieren und sofort trocknen, beispielsweise durch Versprühen von Wasserglas und Mineralsäure in einer Sprühtrocknungsvorrichtung.

Es ist bekannt, das im Hydrogel enthaltene Wasser durch Behandlung mit einer leichtersiedenden, wasserlöslichen Flüssigkeit, z. B. flüchtigen Alkanolen wie Methanol, Ethanol oder Isopropanol, zu verdrängen und das erhaltene entwässerte Material (dieses wird in der Regel als Organogel bezeichnet, bei Verwendung von Alkoholen ein sogenanntes Alkogel) unter überkritischen Bedingungen zu trocknen (siehe beispielsweise US 2249767). Aus EP 171722 ist bekannt, eine solche überkritische Trocknung in CO₂ durchzuführen.

Für viele Anwendungszwecke, insbesondere bei Verwendung als thermisches Isoliermaterial, ist die Aufnahme von Wasser in das poröse, feste oxidische Material unerwünscht, da hierbei das Material altert und seine vorteilhaften Eigenschaften verloren gehen. Die Trocknung des entwässerten Materials, also des Organogels, in Gegenwart von Alkoholen führt zu einer gewissen Hydrophobierung, da die Alkoholmoleküle über ihre OH-Gruppen eine chemische Bindung mit der Oberfläche des oxidischen Materials eingehen können.

Als hydrophobierende Reagenzien sind weitere Verbindungen, z. B. siliciumorganische Verbindungen, bekannt, mit denen das entwässerte, d. h. getrocknete Hydrogel, d. h. das Organogel, in der Gasphase behandelt wird oder die auch bereits bei der Fällung, Prozess-Zwischenschritten oder der überkritischen Trocknung anwesend sein können. Durch die Belegung der Oberfläche mit hydrophoben Verbindungen soll verhindert werden, dass das poröse, feste oxidische Material wieder Wasser aufnimmt.

Aus den genannten Gründen besteht somit Bedarf an Verfahren zur Oberflächenmodifizierung von porösen, festen anorganischen Materialien, insbesondere porösen, festen oxidischen Materialien.

Die Herstellung feinteiliger Gebilde aus anorganischen Materialien, die nach dem erfindungsgemäßen Verfahren oberflächenmodifiziert werden können, ist grundsätzlich bekannt, beispielsweise aus WO 03/034979 und WO 2010/122049, oder diese werden nach Standardverfahren hergestellt, beispielsweise durch Sol-Gel-Verfahren in mehrphasigen Systemen oder durch Sol-Gel-Verfahren in Verbindung mit Elektrospinning.

Für unterschiedlichste Anwendungen ist es von Vorteil, die Oberfläche der feinteiligen anorganischen Gebilde mit organischen Molekülen zu modifizieren. Hierdurch lassen sich die Eigenschaften der anorganischen Gebilde, z. B. elektrische Leitfähigkeit, Hydrophilie/Lipophilie, Adsorptionsvermögen oder optische Eigenschaften, gezielt einstellen. Für viele Anwendungen ist es von Interesse, die Modifizierung der anorganischen Gebilde nachträglich, also nach deren Synthese und ggf. Aufreinigung und/oder Isolierung, durchzuführen.

Ein Problem bei der nachträglichen Oberflächenmodifizierung der feinteiligen anorganischen Gebilde ist jedoch deren mechanische Instabilität im Vergleich zu "bulk"-Nanopartikeln in Form von unstrukturierten, mechanisch robusten Pulvern. Insbesondere die aus harten anorganischen Materialien gebildeten, feinteiligen anorganischen Gebilde sind spröde und mechanisch fragil. Klassische nasschemische Methoden zur Oberflächenmodifizierung führen aufgrund der dabei auftretenden mechanische Belastung häufig zur Zerstörung der feinteiligen anorganischen Gebilde. Diese mechanische Belastung kann auf Kräfte zurückzuführen sein, die beispielsweise beim Durchmischen und Rühren sowie in Dampfblasenbildungs- und/oder Ausgasungsprozessen auftreten. Auch Kapillarkräfte können zur Zerstörung der feinteiligen anorganischen Gebilde führen.

Es hat sich gezeigt, dass ein besonders geringer Zerstörungsgrad der feinteiligen, anorganischen Gebilde erzielt wird, wenn man die Oberflächenmodifikation der Gebilde unter überkritischen Bedingungen erfolgen lässt.

WO 95/06617 beschreibt ein Verfahren zur Herstellung hydrophobierter Kieselsäureaerogele mit verbesserten Eigenschaften, welches die Umsetzung einer Wasserglaslösung mit einer Säure, Waschen des gebildeten Hydrogels mit Wasser zur Entfernung ionischer Bestandteile, Behandlung des Hydrogels mit einem Alkohol, insbesondere Isopropanol, und überkritische Trocknung des erhaltenen Alkogels in Gegenwart des Alkohols umfasst. Die erreichte Hydrophobierung, insbesondere aber ihre Langzeitbeständigkeit, ist jedoch nicht zufriedenstellend. Auch die Dokumente WO 01/52981 A1, KR 2012 0115068 A und JP 2007 099607 A offenbaren Verfahren zur Herstellung oberflächenmodifizierter anorganischer Materialien, die unter überkritischen Bedingungen durchgeführt werden können.

Die
nach dem Stand der Technik hergestellten oberflächenmodifizierten porösen oder feinteiligen, festen anorganischen Materialien weisen die Nachteile auf, dass die erforderlichen überkritischen Bedingungen während der Reaktionsführung hohe Temperaturen und hohe Drücke erfordern. Hohe Temperaturen und hohe Drücke stellen besondere Herausforderungen an die verwendeten Reaktionsgefäße und die weiteren apparativen Aufbauten. Hochdruckreaktionsgefäße, z. B. Autoklaven, sind teuer. Die Reaktionsführung bei hohen Temperaturen und hohen Drücken stellt weiterhin prinzipiell ein höheres Gefahrenpotential dar. Außerdem muss mehr Energie aufgewendet werden, um hohe Temperaturen und hohe Drücke zu erzeugen.

Es besteht daher Bedarf an Verfahren zur Oberflächenmodifizierung poröser oder feinteiliger, fester anorganischer Materialien, die einen hohen Modifizierungsgrad der Oberfläche mit den reaktiven Molekülen erlauben, so dass beispielsweise die erhaltenen oberflächenmodifizierten Aerogele nur eine geringe Wasseraufnahme zeigen und somit langzeitstabil sind und oberflächenmodifizierte feinteilige anorganische Gebilde bei hoher Oberflächenbedeckung nicht oder nur in geringem Maße zerstört werden. Diese Verfahren sollen die oben beschriebenen Nachteile nicht aufweisen.

Es wurde nun überraschenderweise gefunden, dass die genannten Nachteile überwunden werden können durch ein Verfahren zur Herstellung von porösen oder feinteiligen, festen anorganischen Materialien, deren Oberfläche mit wenigstens einer organischen Substanz modifiziert ist, in dem die porösen oder feinteiligen, festen anorganischen Materialien mit einer organischen Flüssigkeit behandelt werden, die wenigstens eine reaktive organische Substanz umfasst, welche mit der Oberfläche des anorganischen Materials reagieren kann und die ausgewählt ist unter C₁-C₆-Alkanolen, C₁-C₆-Alkancarbonsäuren, C₂-C₆-Alkanpolycarbonsäuren, C₂-C₆-Alkanpolyolen, C₂-C₄-Alkylencarbonaten und deren Mischungen, und welche zusätzlich wenigstens eine inerte organische Substanz umfasst. Hierbei wird die inerte organische Substanz so gewählt, dass die Mischung aus reaktiver und inerter organischer Substanz einen kritischen Punkt aufweist, der bei geringerer Temperatur und/oder geringerem Druck als der kritische Punkt der reaktiven organischen Substanz liegt.

Durch Zusatz einer inerten organischen Substanz zur reaktiven organischen Substanz gelingt es, die kritische Temperatur und/oder den kritischen Druck der Mischung herabzusetzen. Hierbei bleiben überraschenderweise nicht nur die vorteilhaften Eigenschaften der porösen oder feinteiligen, festen anorganischen Materialien, wie geringes Wasseraufnahmevermögen, erhalten. Vielmehr lässt sich auf diese Weise auch der Zerstörungsgrad der feinteiligen, festen anorganischen Materialien weiter verringern.

Die Erfindung betrifft daher ein Verfahren zur Herstellung von porösen oder feinteiligen, festen anorganischen Materialien gemäss Anspruch 1. Die im erfindungsgemäßen Verfahren hergestellten porösen, festen anorganischen Materialien werden insbesondere nach folgenden Schritten hergestellt:
a) Bereitstellung eines Hydrogels des anorganischen Materials,
b) Entfernen des Wassers durch Behandeln des Hydrogels mit einer wasserfreien organischen Flüssigkeit, die bei 20°C mit Wasser keine Mischungslücke aufweist, und
c) Trocknen des behandelten Hydrogels, also des in Schritt b) erhaltenen Organogels, unter überkritischen Bedingungen in Gegenwart einer organischen Flüssigkeit, bei der es sich um eine Mischung aus der wenigsten einen reaktiven organischen Substanz und der wenigsten einen inerten organischen Substanz gemäß Anspruch 1 handelt.
Die im erfindungsgemäßen Verfahren hergestellten porösen, festen anorganischen Materialien weisen die Vorteile einer nur geringen Wasseraufnahme und einer hohen Langzeitstabilität auf. Außerdem hat sich gezeigt, dass bei Verwendung niedrigerer Temperaturen und/oder niedrigerer Drücke im erfindungsgemäßen Verfahren der Anteil an zerstörten porösen, festen anorganischen Materialien, der meist in der Form von feinem Pulver anfällt, verringert werden kann, insbesondere bei der Herstellung poröser, fester anorganischer Materialien mit geringer Dichte. Als Ausgangsmaterialien für die Herstellung der porösen, festen anorganischen Materialien verwendet man Hydrogele auf Basis von Halbmetall- oder Metalloxiden, insbesondere Hydrogele auf Basis von Siliciumdioxid, Zinkoxid, Zinn(IV)-oxid, Titan(IV)-oxid, Cer(IV)-oxid und Aluminiumoxid, speziell auf Basis von Siliciumdioxid. Der Anteil an bevorzugt eingesetzten Hydrogelen auf Basis von Halbmetall- oder Metalloxiden beträgt im Allgemeinen wenigstens 90 Gew.-%, insbesondere wenigstens 95 Gew.-%, bezogen auf die Gesamtmenge der eingesetzten Hydrogele.

Verfahren zur Herstellung von Hydrogelen, welche den porösen, festen anorganischen Materialien zugrunde liegen, sind grundsätzlich bekannt, beispielsweise aus dem eingangs zitierten Stand der Technik. In der Regel erfolgt die Herstellung der Hydrogele durch Hydrolyse von geeigneten Metalloxid-Precursoren, beispielsweise Metallsalzen oder kovalenten Metallverbindungen oder Halbmetallverbindungen wie (Halb-)Metallhalogeniden oder (Halb-)Metallalkoxiden, gegebenenfalls gefolgt von einer partiellen Kondensation der bei der Hydrolyse gebildeten (Halb-)Metallhydroxide bzw. (Halb-)Metalloxidhydroxide.

Beispielsweise erfolgt die Herstellung von Hydrogelen auf Siliciumdioxidbasis im Allgemeinen unter Kondensation von Alkalimetall-Wasserglas, insbesondere Natronwasserglas. Dabei wird üblicherweise eine Wasserglas-Lösung, beispielsweise eine 10- bis 30-gewichtsprozentige, vorzugsweise 12- bis 20-gewichtsprozentige Wasserglaslösung, mit einer verdünnten wässrigen Säure, beispielsweise einer 1- bis 50-gewichtsprozentigen, insbesondere 5- bis 40-gewichtsprozentigen, insbesondere einer wässrigen Mineralsäure, vorzugsweise Schwefelsäure, vermischt. Vorzugsweise wird so viel Säure eingesetzt, dass sich im Mischprodukt ein pH-Wert von 7,5 bis 11, insbesondere 8 bis 11, besonders bevorzugt 8,5 bis 10, ganz besonders bevorzugt 8,5 bis 9,5, einstellt. Insbesondere geeignet für dieses Verfahren ist die Verwendung einer Mischdüse, aus der die Mischung aus Wasserglaslösung und verdünnter Mineralsäure versprüht wird und wobei das beim Vermischen gebildete Sol während der Flugphase in der Luft zu Hydrogeltröpfchen erstarrt. Selbstverständlich ist es z. B. auch möglich, Hydrogelformkörper herzustellen, indem man Wasserglas und verdünnte Säure in geeigneter Form zusammengibt und anschließend die Gelierung erfolgen lässt.

Bevorzugt befreit man vor Entfernen des Wassers das Hydrogel von ionischen Bestandteilen durch Waschen mit Wasser oder verdünnten wässrigen Lösungen anorganischer Basen, wobei man vorzugsweise so vorgeht, dass sich der pH-Wert des Hydrogels kaum, d. h. weniger als 2 pH-Einheiten, insbesondere weniger als 1 pH-Einheit, verändert und nahezu dem im Mischprodukt eingestellten Wert entspricht. Als anorganische Basen können beispielsweise wässrige Lösungen von Alkalimetallhydroxiden wie Natronlauge oder wässriger Ammoniak verwendet werden. Hierbei wird man vorzugsweise so vorgehen, dass das Hydrogel auch nach dem Waschvorgang einen pH-Wert in dem genannten Bereich von 7,5 bis 11, bevorzugt 8,5 bis 10, besonders bevorzugt 9 bis 10, aufweist. Vorzugsweise wird der Waschvorgang so lange durchgeführt, bis die Leitfähigkeit des abfließenden Waschwassers etwa 20 bis 300 µS/cm, vorzugsweise 50 bis 150 µS/cm, beträgt. Das entspricht einem Alkalimetall-(Natrium-)Gehalt des Hydrogels von in der Regel 0,1 bis 1,7 Gew.-%, bevorzugt 0,4 bis 1,3 Gew.-%, ermittelt an einer bei 10 mbar und 80 °C für 12 h getrockneten Probe.

Die erfindungsgemäß hergestellten Hydrogele können auch, wie in der DE 3914850 beschrieben, pigmenthaltig sein, wobei insbesondere solche Pigmente geeignet sind, die Infrarotstrahlung der Wellenlänge von 3 bis 10 µm streuen, absorbieren oder reflektieren. Derartige Pigmente werden dem Hydrogel in der Regel bereits bei seiner Herstellung zugesetzt.

Vorzugsweise entfernt man das Wasser aus dem Hydrogel durch Behandeln mit einer mit Wasser mischbaren organischen Flüssigkeit. Die zum Entfernen des Wassers eingesetzte, mit Wasser mischbare organische Flüssigkeit ist im Wesentlichen wasserfrei, d. h., sie weist im Allgemeinen einen Wassergehalt von maximal 5 Gew.-%, insbesondere 0 bis 2 Gew.-% und speziell 0 bis 1 Gew.-%, bezogen auf die gesamte mit Wasser mischbare Flüssigkeit, auf.

Durch das Behandeln des Hydrogels mit der mit Wasser mischbaren wasserfreien organischen Flüssigkeit wird die im Hydrogel enthaltene wässrige Phase durch die weitgehend oder im Wesentlichen wasserfreie mit Wasser mischbare organische Flüssigkeit weitgehend oder insbesondere nahezu vollständig ersetzt. Zum Behandeln des Hydrogels mit der mit Wasser mischbaren wasserfreien organischen Flüssigkeit wird das Hydrogel mit der Flüssigkeit in Kontakt gebracht, und anschließend wird das behandelte Produkt von der Flüssigkeit abgetrennt. Beispielsweise kann man das Hydrogel in der mit Wasser mischbaren organischen Flüssigkeit suspendieren und anschließend die festen oder gelförmigen Bestandteile von der flüssigen Phase trennen, z. B. durch Filtration oder Zentrifugation. Vorteilhafterweise wird die Behandlung unter Zuhilfenahme einer Durchflussapparatur vorgenommen. Hierzu wird das Hydrogel in ein geeignetes Gefäß eingebracht, das einen Zulauf für die mit Wasser mischbare organische Flüssigkeit und einen Ablauf aufweist, wobei Zulauf und Ablauf so angeordnet sind, dass das Hydrogel von der mit Wasser mischbaren organischen Flüssigkeit durchströmt wird. Über den Zulauf wird die mit Wasser mischbare organische Flüssigkeit eingespeist und über den Ablauf die Mischung aus der mit Wasser mischbaren organischen Flüssigkeit und Wasser abgezogen. Vorzugsweise wird die Behandlung so lange durchgeführt, bis der Wassergehalt der abfließenden organischen Phase weniger als 2 Vol.-%, vorzugsweise weniger als 1 Vol.-%, beträgt.

Die Temperatur, bei welcher die Behandlung vorgenommen wird, liegt üblicherweise im Bereich von 0 bis 60 °C, vorzugsweise im Bereich von 10 bis 50 °C, beispielsweise bei 20 bis 30 °C. Man kann die Behandlung des Hydrogels mit der wasserfreien, mit Wasser mischbaren organischen Flüssigkeit jedoch auch bei erhöhter Temperatur durchführen.

Das Entfernen des Wassers durch Behandeln mit der mit Wasser mischbaren, organischen Flüssigkeit erfolgt bevorzugt bei unterkritischen Bedingungen. Bevorzugt findet das Entfernen des Wassers bei Umgebungsdruck statt. Möglich ist auch der Austausch bei vermindertem Druck oder unter erhöhtem Druck. Üblicherweise erfolgt die Behandlung des Hydrogels mit der mit Wasser mischbaren Flüssigkeit bei Umgebungsdruck.

Als Resultat des Wasseraustausches im Hydrogel erhält man ein sogenanntes Organogel, in dem das physikalisch gebundene Wasser weitgehend durch die Bestandteile der mit Wasser mischbaren organischen Flüssigkeit ausgetauscht wurde.

Die zum Behandeln des Hydrogels eingesetzte organische Flüssigkeit ist mit Wasser mischbar, d. h., die Flüssigkeit weist bei 20 °C mit Wasser keine Mischungslücke auf. Bevorzugt sind Flüssigkeiten, die bei Normaldruck einen Siedepunkt im Bereich von 10 bis 100 °C, insbesondere im Bereich von 10 bis 90 °C, aufweisen. Bevorzugt handelt es sich bei der mit Wasser mischbaren Flüssigkeit um ein organisches Lösungsmittel L oder ein Gemisch organischer Lösungsmittel L, das zu wenigstens 70 Gew.-%, bezogen auf die Gesamtmenge der mit Wasser mischbaren organischen Flüssigkeit, aus einem oder mehreren organischen Lösungsmitteln L besteht, die bei 20 °C mit Wasser keine Mischungslücke aufweisen.

Bevorzugt sind organische Lösungsmittel L, die bei Normaldruck einen Siedepunkt im Bereich von 30 bis 120 °C, insbesondere im Bereich von 30 bis 100 °C, aufweisen. Bevorzugt ist das organische Lösungsmittel L ausgewählt unter C₁-C₄-Alkanolen, wie beispielsweise Methanol, Ethanol, n-Propanol, Isopropanol, n-Butanol, Isobutanol, 2-Butanol und tert.-Butanol, C₁-C₄-Alkanalen wie Formaldehyd, Acetaldehyd, Propionaldehyd, Butyraldehyd und Isobutyraldehyd und C₃-C₄-Ketonen wie Aceton oder Methylethylketon sowie deren Mischungen. Besonders bevorzugt handelt es sich bei dem organischen Lösungsmittel L um ein C₁-C₄-Alkanol. Ganz besonders bevorzugt handelt es sich um Isopropanol.

Die mit Wasser mischbare organische Flüssigkeit, welche beim Entfernen des Wassers des Hydrogels eingesetzt wird, kann bereits die reaktive organische Substanz, wie unten definiert, umfassen. Bevorzugt umfasst die beim Entfernen des Wassers des Hydrogels eingesetzte organische Flüssigkeit bereits die reaktive organische Substanz. Besonders bevorzugt umfasst die beim Entfernen des Wassers eingesetzte organische Flüssigkeit die reaktive organische Substanz und die inerte organische Substanz.

Im Anschluss an das Entfernen des Wassers des Hydrogels wird das so erhaltene, behandelte Hydrogel, d. h. das Organogel, nach dem erfindungsgemäßen Verfahren behandelt.

In dem erfindungsgemäßen Verfahren können auch feinteilige, feste anorganische Materialien eingesetzt werden. Das erfindungsgemäße Verfahren umfasst dann vorzugsweise die folgenden Schritte:
a') Bereitstellung eines feinteiligen, festen anorganischen Materials mit unmodifizierter Oberfläche und
b') Behandeln des in Schritt a') bereitgestellten Materials mit der organischen Flüssigkeit unter überkritischen Bedingungen.

Bei den im erfindungsgemäßen Verfahren einsetzbaren feinteiligen, festen anorganischen Materialien handelt es sich insbesondere um feinteilige, harte anorganische Gebilde.

Unter feinteiligen, festen, insbesondere harten anorganischen Gebilden werden Gebilde verstanden, die in wenigstens einer Raumrichtung eine Materialstärke M von maximal 1000 nm und als Gesamtgebilde in wenigstens einer Raumrichtung eine Abmessung aufweisen, die mindestens das 5-fache der Materialstärke M beträgt. Bei der Materialstärke M kann es sich beispielsweise um die Wanddicke der Kugelschale einer Hohlkugel, den Durchmesser einer Faser, die Dicke eines Plättchens oder den Durchmesser von einzelnen Primärpartikeln, die ein Agglomerat bilden, handeln. Bei der Abmessung des Gesamtgebildes kann es sich beispielsweise um den Durchmesser einer Hohlkugel, die Länge einer Faser, die Abmessung eines Plättchens in seiner größten Dimension oder um die Abmessung des Agglomerates in seiner größten Ausdehnung handeln.

Die feinteiligen, festen, insbesondere harten anorganischen Gebilde weisen in der Regel in wenigstens einer Raumrichtung eine Materialstärke M von maximal 1000 nm, insbesondere im Bereich von 2 bis 500 nm, und als Gesamtgebilde in wenigstens einer Raumrichtung eine Abmessung auf, die mindestens das 5-fache, insbesondere das wenigstens 10-fache, der Materialstärke M beträgt.

Die feinteiligen, festen, insbesondere harten anorganischen Gebilde weisen vorzugsweise als Gesamtgebilde in wenigstens einer Raumrichtung eine Abmessung im Bereich von 10 µm bis 10 cm, besonders bevorzugt im Bereich von 10 µm bis 5 cm, ganz besonders bevorzugt im Bereich von 10 µm bis 1 cm, auf.

Als feinteilige, feste, insbesondere harte anorganische Gebilde für das erfindungsgemäße Verfahren sind insbesondere die folgenden geeignet:
i. Hohlkugeln, deren Kugelschale eine Dicke von maximal 100 nm und insbesondere im Bereich von 2 bis 50 nm aufweist und deren Verhältnis von Kugeldurchmesser zu Dicke der Kugelschale wenigstens 5, insbesondere wenigstens 7, speziell wenigstens 10, beträgt und beispielsweise im Bereich von 5 bis 200, insbesondere im Bereich von 7 bis 150 und speziell im Bereich von 10 bis 100 liegt;
ii. Fasern mit einer Faserdicke von maximal 1000 nm, insbesondere 50 bis 500 nm, und einem Aspekt-Verhältnis von wenigstens 50, insbesondere wenigstens 100, z. B. im Bereich von 50 bis 5000, insbesondere im Bereich von 100 bis 2000;
iii. Plättchen mit einer Dicke von maximal 100 nm und einem Verhältnis von Durchmesser zu Dicke von wenigstens 5, insbesondere wenigstens 10, beispielsweise im Bereich von 5 bis 200, insbesondere im Bereich von 7 bis 150 und speziell von 10 bis 100;
iv. Agglomerate von Partikeln, die einen mittleren Partikeldurchmesser von maximal 100 nm, insbesondere 2 bis 80 nm, aufweisen, wobei der Volumenanteil des anorganischen Materials, bezogen auf das Gesamtvolumen des Agglomerats, im Bereich von 1 bis 20 Vol.-% liegt.

Die im erfindungsgemäßen Verfahren eingesetzten feinteiligen, festen, insbesondere harten anorganischen Materialien, bevorzugt feinteiligen, harten anorganischen Gebilde, können unfunktionalisiert, d. h. noch nicht mit einer reaktiven Substanz behandelt worden sein, oder bereits teilweise funktionalisiert sein. Vorzugsweise werden feinteilige, feste anorganische Materialien, bevorzugt feinteilige, harte anorganische Gebilde, eingesetzt, die unfunktionalisiert sind, also weniger als 3 Gew.-%, bevorzugt weniger als 1 Gew.-% oder weniger als 0,1 Gew.-% an reaktiver organischer Substanz, bezogen auf das Gesamtgewicht der feinteiligen, festen anorganischen Materialien, an der Oberfläche aufweisen.

Das Material, aus denen die feinteiligen, harten anorganischen Gebilde bestehen, weist im Allgemeinen eine Mohs'sche Härte von größer 4, insbesondere eine Mohs'sche Härte im Bereich von 4,5 bis 9, bevorzugt im Bereich von 5 bis 7, auf. Das feste, insbesondere harte, anorganische Material ist ausgewählt unter Metalloxiden und Halbmetalloxiden.

Insbesondere umfasst das feste, insbesondere harte, anorganische Material als Hauptkomponente, d. h. in einer Menge von 90 bis 100 Gew.-%, bezogen auf das Gesamtgewicht des festen, insbesondere harten, anorganischen Materials, wenigstens eines der Oxide aus der Gruppe Siliciumdioxid, Zinkoxid, Zinn(IV)-oxid, Titan(IV)-oxid und Aluminiumoxid. Insbesondere umfasst das feste, insbesondere harte, anorganische Material als Hauptkomponente, d. h. in einer Menge von 90 bis 100 Gew.-%, bezogen auf das Gesamtgewicht des festen, insbesondere harten, anorganischen Materials, wenigstens eines der Oxide aus der Gruppe Siliciumdioxid, Titan(IV)-oxid und Aluminiumoxid oder ein Gemisch dieser Oxide mit wenigstens einem weiteren Oxid aus der Gruppe Zinkoxid und Zinn(IV)-oxid. Speziell umfasst das feste, insbesondere harte, anorganische Material als Hauptkomponente, d. h. in einer Menge von 90 bis 100 Gew.-%, bezogen auf das Gesamtgewicht des festen, insbesondere harten, anorganischen Materials, Siliciumdioxid.

Feinteilige Gebilde aus anorganischen harten Materialien sind grundsätzlich bekannt, beispielsweise aus WO 03/034979 und WO 2010/122049, oder können nach Standardverfahren hergestellt werden, beispielsweise durch Sol-Gel-Verfahren in mehrphasigen Systemen oder durch Sol-Gel-Verfahren in Verbindung mit Elektrospinning.

Erfindungsgemäß werden die porösen oder feinteiligen, festen anorganischen Materialien einer überkritischen Behandlung mit einer organischen Flüssigkeit unterworfen.

Die Konzentration der reaktiven organischen Substanz in der organischen Flüssigkeit wird im Allgemeinen so gewählt, dass die erhaltene Mischung leicht in den überkritischen Zustand überführt werden kann.

Im Allgemeinen liegt die Konzentration der reaktiven organischen Substanz in der organischen Flüssigkeit daher im Bereich von 0,01 bis 50 Gew.-%, insbesondere im Bereich von 0,1 bis 20 Gew.-%, bezogen auf das Gesamtgewicht der organischen Flüssigkeit. Entsprechend wird die reaktive organische Substanz im Allgemeinen in einer Menge im Bereich von 0,01 bis 50 Gew.-%, insbesondere im Bereich von 0,1 bis 20 Gew.-%, bezogen auf das Gesamtgewicht der organischen Flüssigkeit, eingesetzt.

Die reaktive organische Substanz weist wenigstens eine, z. B. 1 bis 10 oder 1 bis 5, reaktive Funktionalitäten F auf. Bevorzugt weist die reaktive Verbindung eine, zwei oder drei reaktive Funktionalitäten F auf. Als reaktive Funktionalitäten F werden im Sinne der Erfindung Atome und/oder Atomgruppen verstanden, die unter Ausbildung einer chemischen Bindung, vorzugsweise einer kovalenten chemischen Bindung, mit den Atomen des porösen oder feinteiligen, festen anorganischen Materials reagieren können. Die reaktiven Funktionalitäten F sind erfindungsgemäß ausgewählt kohlenstoffgebundenen Hydroxylgruppen, Carboxylgruppen und Carbonatgruppen. Erfindungsgemäß ist die reaktive organische Substanz ausgewählt unter C₁-C₆-Alkanolen, C₁-C₆-Alkancarbonsäuren, C₂-C₆-Alkanpolycarbonsäuren, C₂-C₆-Alkanpolyolen, C₂-C₄-Alkylencarbonaten und deren Mischungen.

Weiterhin bevorzugt ist die reaktive organische Substanz ausgewählt unter C₁-C₄-Alkanolen, Mischungen wenigstens zweier C₁-C₄-Alkanole und Mischungen wenigstens eines C₁-C₄-Alkanols mit wenigstens einer weiteren reaktiven organischen Substanz, die unter C₂-C₆-Alkanpolyolen, C₂-C₄-Alkylencarbonaten und C₂-C₆-Alkanpolycarbonsäuren ausgewählt ist.

Besonders bevorzugte reaktive organische Substanzen sind C₂-C₆-Alkanpolyole, speziell Ethylenglykol, 1,2-Propandiol, 1,3-Propandiol und Glycerin, C₂-C₄-Alkylencarbonate, speziell Ethylencarbonat und Propylencarbonat, und C₂-C₆-Alkanpolycarbonsäuren, speziell Malonsäure und Oxalsäure.

Ganz besonders bevorzugte reaktive organische Substanzen sind Methanol, Ethanol, Isopropanol, tert.-Butanol, Glycerin, Ethylenglykol, 1,2-Propandiol, 1,3-Propandiol, Oxalsäure, Malonsäure, Ethylencarbonat, Propylencarbonat und deren Mischungen.

Spezielle reaktive organische Substanzen sind Methanol, Ethanol, Isopropanol, 1,2-Propandiol, 1,3-Propandiol, Oxalsäure, Malonsäure, Ethylencarbonat, Propylencarbonat und deren Mischungen.

Ganz speziell ist die reaktive organische Substanz Isopropanol.

Geeignete inerte organische Substanzen sind organische Substanzen, die keine reaktive Funktionalität F aufweisen sowie eine niedrigere kritische Temperatur und/oder einen niedrigeren kritischen Druck als die reaktive organische Substanz aufweisen.

Die inerte organische Substanz weist vorzugsweise eine kritische Temperatur im Bereich von 20 bis 300 °C, insbesondere im Bereich von 100 bis 250 °C, auf.

Die inerte organische Substanz weist vorzugsweise einen kritischen Druck im Bereich von 20 bis 80 bar, insbesondere im Bereich von 20 bis 50 bar, auf.

Die inerte organische Substanz ist insbesondere ausgewählt unter C₁-C₈-Alkanen, C₂-C₈-Alkenen, Dialkylethern mit einer Gesamtkohlenstoffzahl im Bereich von 2 bis 6, C₃-C₄-Ketonen, Dichlormethan und deren Mischungen.

Geeignete inerte organische Substanzen sind vor allem C₂-C₈-Alkane wie Ethan, Propan, n-Butan, Isobutan, n-Pentan, Isopentan, n-Hexan und seine Isomere, n-Heptan und seine Isomere. Geeignete inerte organische Substanzen sind auch C₂-C₈-Alkene wie Ethen, Propen, n-Buten, 2-Buten, Isobuten, 1-Penten und 1-Hexen. Geeignet sind weiterhin Dialkylether mit einer Gesamtkohlenstoffanzahl im Bereich von 2 bis 6 wie Dimethylether, Diethylether, Methylisopropylether, Methyl-tert.-butylether sowie C₃-C₄-Ketone, nämlich Aceton und Methylethylketon, sowie Dichlormethan und deren Mischungen.

In einer bevorzugten Ausführungsform der Erfindung ist die inerte organische Substanz ein C₃-C₈-Alkan, insbesondere n-Pentan, n-Hexan oder n-Heptan, und die reaktive organische Substanz ein C₂-C₄-Alkanol, insbesondere Isopropanol.

Bevorzugt weist die organische Flüssigkeit eine kritische Temperatur T_{c} im Bereich von 110 bis 300 °C auf.

Die Konzentration der inerten organischen Substanz in der organischen Flüssigkeit liegt im Allgemeinen im Bereich von 30 bis 95 Gew.-%, insbesondere im Bereich von 40 bis 80 Gew.-%, bezogen auf die organische Flüssigkeit.

Die überkritische Oberflächenmodifizierung sowohl von porösen, festen anorganischen Materialien als auch von feinteiligen, festen anorganischen Materialien kann in üblicher Weise, beispielsweise in Analogie zu dem eingangs zitierten Stand der Technik, vorgenommen werden.

Im Allgemeinen wird eine Mischung der organischen Flüssigkeit, welche die reaktive organische Substanz enthält, mit z. B. den feinteiligen anorganischen Gebilden oder z. B. dem Organogel, beispielsweise eine Suspension, unter Druck auf eine Temperatur oberhalb der kritischen Temperatur erhitzt.

Das Behandeln unter überkritischen Bedingungen erfolgt bevorzugt bei einer Temperatur von maximal 40 K, insbesondere maximal 20 K oberhalb der kritischen Temperatur der organischen Flüssigkeit.

In der Regel liegt die Temperatur während der Behandlung im Bereich von 100 bis 300 °C, bevorzugt 150 bis 250 °C. Der hierfür erforderliche Druck liegt typischerweise im Bereich von 20 bis 100 bar, bevorzugt 20 bis 60 bar.

In der Regel wird man so vorgehen, dass man die zu behandelnden Materialien bei unterkritischen Bedingungen in die in einem Druckbehälter, z. B. einem Autoklaven, vorgelegte organische Flüssigkeit einbringt und dann die Flüssigkeit durch Erwärmen unter Druck auf überkritische Bedingungen bringt, so dass zu keinem Zeitpunkt der Behandlung die Siedetemperatur bei dem im Reaktionsgefäß herrschenden Druck überschritten wird. Vorzugsweise hält man das Gemisch für einen Zeitraum von 1 min bis 8 h, insbesondere 1 min bis 4 h, unter überkritischen Bedingungen.

Sofern poröse, feste anorganische Materialien, z. B. Aerogele, nach dem erfindungsgemäßen Verfahren oberflächenmodifiziert werden, wird man vorzugsweise so vorgehen, dass man die Behandlung unter überkritischen Bedingungen ("Trocknung") direkt an das Entfernen des Wassers anschließt.

Die organische Flüssigkeit wird nach der gewünschten Reaktionszeit durch Entspannen, vorzugsweise isothermes Entspannen, bevorzugt allmählich durch schwaches Öffnen des Druckventils, aus dem Druckbehälter entfernt. Vorzugsweise führt man die Entspannung mit einer Entspannungsrate im Bereich von 0,1 bis 5 bar/min durch. Während der überkritischen Oberflächenreaktion wird man vorzugsweise das Entstehen größerer Gasmengen durch unkontrollierte Verdampfung oder Ausgasung mittels Entspannen, d. h., besagtes Entfernen des Gasgemisches über das Druckventil, verhindern.

An das erfindungsgemäße Verfahren können sich weitere Verfahrensschritte anschließen. Es können sich beispielsweise weitere Reinigungs- und Aufarbeitungsschritte anschließen. Hierbei kann es sich beispielsweise um das Spülen des Druckbehälters mit Druckluft oder gasförmigem Stickstoff handeln, um insbesondere noch vorhandene Reste der organischen Flüssigkeit zu entfernen. An das erfindungsgemäße Verfahren kann sich auch eine unterkritische, konventionelle Trocknung bei leicht erhöhter Temperatur, gegebenenfalls unter Spülen mit Druckluft oder gasförmigem Stickstoff, anschließen. An das erfindungsgemäße Verfahren können sich weiterhin beispielsweise Schritte zur Aufreinigung, zum Tempern und/oder Calcinieren, Sieben und/oder Klassifizieren, Verpressen, Verkleben oder eine Immersion in Aktivstoffe anschließen.

Als Verfahrensprodukt des erfindungsgemäßen Verfahrens erhält man poröse oder feinteilige, feste anorganische Materialien.

Die Oberfläche dieser anorganischen Materialien ist mit der reaktiven organischen Substanz modifiziert. Der Grad der Oberflächenbelegung lässt sich beispielsweise über den in der Elementaranalyse ermittelten Kohlenstoffgehalt bestimmen.

Der Kohlenstoffgehalt der oberflächenmodifizierten porösen, festen anorganischen Materialien liegt bevorzugt im Bereich von 0,1 bis 15 Gew.-%, insbesondere im Bereich von 1,5 bis 13 Gew.-%, bezogen auf das Gesamtgewicht der oberflächenfunktionalisierten porösen, festen anorganischen Materialien.

Der Kohlenstoffgehalt der oberflächenmodifizierten feinteiligen, festen anorganischen Materialien liegt bevorzugt im Bereich von 0,1 bis 15 Gew.-%, insbesondere im Bereich von 1,5 bis 13 Gew.-%, bezogen auf das Gesamtgewicht der oberflächenfunktionalisierten feinteiligen, festen anorganischen Materialien.

Das nach dem erfindungsgemäßen Verfahren erhältliche feinteilige, feste anorganische Material weist ein anorganisches Material auf, das unter Metalloxiden und Halbmetalloxiden ausgewählt ist und als Hauptbestandteil insbesondere wenigstens ein Oxid in einer Menge von 90 bis 100 Gew.-%, bezogen auf das Gesamtgewicht des anorganischen Materials, enthält, das unter Siliciumdioxid, Zinkoxid, Zinn(IV)-oxid, Titan(IV)-oxid und Aluminiumoxid ausgewählt ist.

Das nach dem erfindungsgemäßen Verfahren erhältliche poröse, feste anorganische Material weist aufgrund der Behandlung mit der reaktiven organischen Substanz verbesserte Eigenschaften, insbesondere eine hydrophobierte Oberfläche und eine geringere Wasseraufnahme auch bei längerem Wasserkontakt, auf.

Aufgrund der hohen Porosität weist das poröse, feste anorganische Material nur geringe Schüttdichten von etwa 25 bis 300 g/L, bevorzugt 50 bis 200 g/L, besonders bevorzugt 100 bis 150 g/L auf. Der Anteil der Poren am Gesamtvolumen des Materials liegt bei etwa 50 bis 98 Volumen-%, insbesondere 75 bis 97 Volumen-%.

In bevorzugten Ausführungsformen der Erfindung umfasst das erfindungsgemäß erhältliche poröse, feste anorganische Material als Hauptkomponente, d. h. in einer Menge von 90 bis 100 Gew.-%, bezogen auf das Gesamtgewicht des porösen, festen anorganischen Materials, wenigstens eines Oxids aus der Gruppe Siliciumdioxid, Zinkoxid, Zinn(IV)-oxid, Titan(IV)-oxid, Cer(IV)-oxid und Aluminiumoxid. Insbesondere umfasst das erfindungsgemäß erhältliche poröse, feste anorganische Material als Hauptkomponente, d. h. in einer Menge von 90 bis 100 Gew.-%, bezogen auf das Gesamtgewicht des porösen, festen anorganischen Materials, wenigstens eines Oxids aus der Gruppe Siliciumdioxid, Titan(IV)-oxid und Aluminiumoxid oder eines Gemisches dieser Oxide mit wenigstens einem weiteren Oxid aus der Gruppe Zinkoxid, Zinn(IV)-oxid und Cer(IV)-oxid. Speziell umfasst das poröse, feste anorganische Material als Hauptkomponente, d. h. in einer Menge von 90 bis 100 Gew.-%, bezogen auf das Gesamtgewicht des porösen, festen anorganischen Materials, wenigstens eines Oxids aus der Gruppe Siliciumdioxid.

Bevorzugt handelt es sich bei dem porösen, festen anorganischen Material um ein Aerogel. Besonders bevorzugt handelt es sich bei dem porösen, festen anorganischen Material um ein Aerogel auf Basis von Siliciumdioxid.

Das nach dem erfindungsgemäßen Verfahren erhaltene poröse, feste anorganische Material kann sowohl als Granulat (übliche Teilchengrößen von 1 bis 8 mm), als auch nach vorheriger Mahlung oder dergleichen als Pulver (Teilchengrößen von weniger als 1 mm) für unterschiedliche Zwecke, z. B. wie in der Einführung beschrieben, eingesetzt werden.

Das durch das erfindungsgemäße Verfahren erhältliche poröse, feste anorganische Material weist im Allgemeinen eine Dichte im Bereich von 0,025 bis 0,30 g/cm³ auf.

Die durch das erfindungsgemäße Verfahren erhältlichen Materialien sind für eine Vielzahl von Anwendungen geeignet.

Die folgenden Beispiele dienen zur Verdeutlichung der Erfindung und sind nicht einschränkend zu verstehen.

### Beispiele:

### Eingesetzte Chemikalien:

Wasserglaslösung (techn., Fa. Woellner)
Natriumoxid (80 %, Fa. Sigma-Aldrich)
Schwefelsäure (> 95 %, Fa. Sigma-Aldrich)
Isopropanol (> 99,9 %, Fa. BCD Chemie)
n-Pentan (98 %, Fa. Sigma-Aldrich)
n-Hexan (98 %, Fa. Sigma-Aldrich)
n-Heptan (98 %, Fa. Sigma-Aldrich)
Ethanol (99,8 %, Fa. Sigma-Aldrich)
Ethylenglykol (99,8 %, Fa. Sigma-Aldrich)

### Analytik:

Schüttdichte angelehnt an ISO 3944
Spezifische Oberfläche durch Adsorption von Stickstoff nach BET bei einer Temperatur von -196 °C gemäß DIN ISO 9277
Elementaranalyse (Kohlenstoffgehalt): vario MICRO cube (Fa. Elementar, Betriebsmodus CHN bei 1000 °C)
Kontaktwinkelmessungen nach DIN 55660

### Herstellungsbeispiel 1 (Herstellung eines Hydrogels auf Kieselsäurebasis):

Man stellte eine 13-Gew.-%ige Wasserglaslösung durch Verdünnen einer technischen Wasserglaslösung mit 27 Gew.-% Siliciumdioxid und 8 Gew.-% Natriumoxid mit Wasser her.

In einer Mischdüse führte man bei 20 °C und 2,5 bar 45,7 L/h der hergestellten 13-Gew.-%igen Wasserglaslösung mit 6 L/h einer 23-Gew.-%igen wässrigen Schwefelsäurelösung zusammen. Das durch fortschreitende Neutralisation der Wasserglaslösung in der Mischkammer gebildete unbeständige Hydrosol hatte einen pH-Wert von 8,1 ± 0,1 und wurde nach einer Verweilzeit von 0,1 s durch das Düsenmundstück (2 mm Durchmesser) versprüht. Der Flüssigkeitsstrahl zerfiel während des Flugs durch die Luft in einzelne Tropfen, die vor dem Auftreffen im Wasserbecken zu transparenten, mechanisch stabilen Hydrogelkugeln erstarrten. Das auf diese Weise erhaltene Hydrogel wurde so lange mit entsalztem Wasser gewaschen, bis die abfließende Waschflüssigkeit eine elektrische Leitfähigkeit von weniger als 110 µS/cm und eine pH-Wert von 9,8 ± 0,1 aufwies. Der Natriumgehalt einer bei 80 °C im Wasserstrahlvakuum getrockneten Probe des Hydrogels betrug 1,1 Gew.-%.

### Herstellungsbeispiel 2 (Herstellung eines Hydrogels auf Kieselsäurebasis mit verringerter Siliciumdioxiddichte):

Man stellt ein Hydrogel analog zu Herstellungsbeispiel 1 her, wobei eine 11-Gew.-%ige Wasserglaslösung durch Verdünnen bereitgestellt und mit einer 20,5%igen wässrigen Schwefelsäurelösung in einer Mischdüse zusammengeführt wurde. Analog zu Herstellungsbeispiel 1 erhielt man Hydrogelkugeln, die eine reduzierte Siliciumdioxiddichte aufwiesen.

### Herstellungsbeispiel 3 (Herstellung eines Alkogels auf Isopropanolbasis):

Man gab 2000 g des Hydrogels aus Herstellungsbeispiel 1 in einen 5-L-Behälter, den man vollständig mit Isopropanol füllte. Man pumpte bei 25 °C so lange wasserfreies Isopropanol durch den Behälter, bis der Wassergehalt des abfließenden Isopropanols weniger als 0,1 Vol.-% betrug. Hierzu wurden etwa 8 L Isopropanol benötigt.

### Herstellungsbeispiel 4 (Herstellung eines Alkogels auf Ethanolbasis):

Man gab 2000 g des Hydrogels aus Herstellungsbeispiel 1 in einen 5-L-Behälter, den man vollständig mit Ethanol füllte. Man pumpte bei 25 °C so lange wasserfreies Ethanol durch den Behälter, bis der Wassergehalt des abfließenden Ethanols weniger als 0,1 Vol.-% betrug. Hierzu wurden etwa 8 L Ethanol benötigt.

### Herstellungsbeispiel 5 (Herstellung eines Alkogels auf Isopropanolbasis mit verringerter Siliciumdioxiddichte):

Man gab 2000 g des Hydrogels aus Herstellungsbeispiel 2 in einen 5-L-Behälter, den man vollständig mit Isopropanol füllte. Man pumpte bei 25 °C so lange wasserfreies Isopropanol durch den Behälter, bis der Wassergehalt des abfließenden Isopropanols weniger als 0,1 Vol.-% betrug. Hierzu wurden etwa 8 L Isopropanol benötigt.

### Herstellungsbeispiel 6 (Siliciumdioxid-Nanopartikel-Agglomerate):

In einer Mischkammer führte man 2 L 13-gew.-%ige technische Wasserglaslösung und 1 L 23-gew.-%ige Schwefelsäure zusammen. Das durch die Neutralisation der Wasserglaslösung entstandene Sol wurde durch eine Düse von 2 mm Durchmesser versprüht. Der Flüssigkeitsstrahl zerfiel während des Fluges durch die Luft in einzelne Tröpfchen, die vor dem Auftreffen in einem Wasserbecken gelierten und zu transparenten, mechanisch stabilen Kugeln erstarrten, die sich zu Nanopartikel-Agglomeraten zusammenlagerten. Die Nanopartikel-Agglomerate wurden mit vollentsalztem Wasser gewaschen, bis die abfließende Waschflüssigkeit eine elektrische Leitfähigkeit von etwa 150 µS/cm aufwies. Dann tauschte man das in den Nanopartikeln enthaltene Wasser durch Isopropanol aus. Hierzu gab man 1 kg der Siliciumdioxid-Nanopartikel-Agglomerate in einen Behälter von 5 L Volumen, den man vollständig mit Isopropanol füllte. Man pumpte bei 25 °C so lange Isopropanol durch den Behälter, bis der Wassergehalt des abfließenden Isopropanols weniger als 0,1 Vol.-% betrug. Hierzu wurden etwa 5 L Isopropanol benötigt. Man trennte die Siliciumdioxid-Nanopartikel-Agglomerate durch Filtration von der flüssigen Phase.

### Man erhielt Siliciumdioxid-Nanopartikel-Agglomerate mit einem durchschnittlichen Agglomerat-Durchmesser von etwa 1 bis 8 mm sowie einem durchschnittlichen Durchmesser der Primär-Nanopartikel von etwa 1 bis 20 nm, bestimmt mittels Lichtmikroskopie und Rasterelektronenmikroskopie. Die Schüttdichte der Siliciumdioxid-Nanopartikel-Agglomerate betrug 750 g/L bei 13 % Feststoffgehalt (Wassergehalt 87 Gew.-%), das entspricht bei unverändertem Volumen einer Schüttdichte des reinen Feststoffes von etwa 100 g/L. Der Kohlenstoffgehalt der Siliciumdioxid-Nanopartikel-Agglomerate betrug weniger als 0,1 Gew.-%.

### Vergleichsbeispiel 1 (Isopropanol):

Man gab 2 L des Alkogels aus Herstellungsbeispiel 3 zusammen mit 6 L Isopropanol in einen beheizbaren Druckbehälter aus Edelstahl (RA4) mit innenliegendem Siebkorb und einem Innenvolumen von 20 L und erhitzte die Mischung innerhalb von 5 h auf 270 °C, wobei der Druck in dem Druckbehälter auf 70 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag in Form eines Granulats mit einer Teilchengrößenverteilung von etwa 1 bis 8 mm vor. Die Schüttdichte betrug 115 g/L. Die spezifische Oberfläche betrug 330 m²/g. Der Kohlenstoffgehalt betrug 6 Gew.-%.

Abwandlung a): Man erhitzte die Mischung innerhalb von 5 h auf 240 °C, wobei der Druck im Druckbehälter auf 50 bar begrenzt wurde. Die Schüttdichte des erhaltenen Materials betrug 120 g/L. Die spezifische Oberfläche betrug 340 m²/g. Der Kohlenstoffgehalt betrug 6 Gew.-%.

Abwandlung b): Man erhitzte die Mischung innerhalb von 5 h auf 220 °C, wobei der Druck im Druckbehälter auf 35 bar begrenzt wurde (unterkritische Bedingungen). Die Schüttdichte des erhaltenen Materials betrug 160 g/L. Die spezifische Oberfläche betrug 300 m²/g. Der Kohlenstoffgehalt betrug 5 Gew.-%. Bei weiterer Herabsetzung des Druckes und/oder der Temperatur nahm die Schüttdichte des erhaltenen Materials weiter zu.

### Vergleichsbeispiel 2 (Isopropanol):

Man gab 2 L des Alkogels aus Herstellungsbeispiel 5 zusammen mit 6 L Isopropanol in einen beheizbaren Druckbehälter aus Edelstahl (RA4) mit innenliegendem Siebkorb und einem Innenvolumen von 20 L und erhitzte die Mischung innerhalb von 5 h auf 270 °C, wobei der Druck in dem Druckbehälter auf 70 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag zu ca. 80 Gew.-% in Form eines Granulats mit einer Teilchengrößenverteilung von etwa 1 bis 8 mm vor. Die Schüttdichte betrug 100 g/L. Ca. 20 Gew.% des Produktes lag als Feinanteil (Pulver) mit erhöhter Schüttdichte vor. Die spezifische Oberfläche betrug 350 m²/g. Der Kohlenstoffgehalt betrug 6 Gew.-%.

### Vergleichsbeispiel 3 (Ethanol):

Man gab 2 L des Alkogels aus Herstellungsbeispiel 4 zusammen mit 6 L Ethanol in einen beheizbaren Druckbehälter aus Edelstahl (RA4) mit innenliegendem Siebkorb und einem Innenvolumen von 20 L und erhitzte die Mischung innerhalb von 5 h auf 270 °C, wobei der Druck in dem Druckbehälter auf 80 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag in Form eines Granulats mit einer Teilchengrößenverteilung von etwa 1 bis 8 mm vor. Die Schüttdichte betrug 125 g/L. Die spezifische Oberfläche betrug 340 m²/g. Der Kohlenstoffgehalt betrug 5 Gew.-%.

### Vergleichsbeispiel 4 (Isopropanol):

Man gab 500 g der Isopropanol-enthaltenden Siliciumdioxid-Nanopartikel-Agglomerate aus Herstellungsbeispiel 6 mit 2 L Isopropanol in einen beheizbaren Druckbehälter aus Edelstahl (RA4) mit innenliegendem Siebkorb und einem Innenvolumen von 20 L. Man erhitzte den Reaktionsansatz innerhalb von 5 h auf 270 °C, wobei der Druck auf 70 bar begrenzt wurde. Danach entspannte man den Reaktionsansatz isotherm innerhalb von 90 min. Man entnahm das abgekühlte Produkt und trocknete es etwa 2 h bei 70 °C und 0,2 bar nach.

Man erhielt oberflächenmodifizierte Siliciumdioxid-Nanopartikel-Agglomerate mit etwa gleichen Abmessungen wie die nicht-modifizierten Siliciumdioxid-Nanopartikel-Agglomerate. Die Schüttdichte der erhaltenen Agglomerate betrug etwa 110 g/L. Die spezifische Oberfläche der Agglomerate betrug etwa 300 bis 400 m²/g. Der Kohlenstoffgehalt der Agglomerate betrug etwa 6 Gew.-%.

### Beispiel 1 (Isopropanol, n-Pentan; Volumenverhältnis 1 : 1):

Man gab 2 L des Alkogels aus Herstellungsbeispiel 3 zusammen mit einer Mischung aus 3 L Isopropanol und 3 L n-Pentan in einen beheizbaren Druckbehälter aus Edelstahl (RA4) mit innenliegendem Siebkorb und einem Innenvolumen von 20 L und erhitzte die Mischung innerhalb von 4 h auf 220 °C, wobei der Druck in dem Druckbehälter auf 35 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag in Form eines Granulats mit einer Teilchengrößenverteilung von etwa 1 bis 8 mm vor. Die Schüttdichte betrug 110 g/L. Die spezifische Oberfläche betrug 320 m²/g. Der Kohlenstoffgehalt betrug 6 Gew.-%.

### Beispiel 2 (Isopropanol, n-Hexan; Volumenverhältnis 1 : 1):

Man gab 2 L des Alkogels aus Herstellungsbeispiel 3 zusammen mit einer Mischung aus 3 L Isopropanol und 3 L n-Hexan in einen beheizbaren Druckbehälter aus Edelstahl (RA4) mit innenliegendem Siebkorb und einem Innenvolumen von 20 L und erhitzte die Mischung innerhalb von 4 h auf 250 °C, wobei der Druck in dem Druckbehälter auf 30 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag in Form eines Granulats mit einer Teilchengrößenverteilung von etwa 1 bis 8 mm vor. Die Schüttdichte betrug 120 g/L. Die spezifische Oberfläche betrug 340 m²/g. Der Kohlenstoffgehalt betrug 6 Gew.-%.

### Beispiel 3 (Isopropanol, n-Heptan; Volumenverhältnis 1 : 1):

Man gab 2 L des Alkogels aus Herstellungsbeispiel 3 zusammen mit einer Mischung aus 3 L Isopropanol und 3 L n-Heptan in einen beheizbaren Druckbehälter aus Edelstahl (RA4) mit innenliegendem Siebkorb und einem Innenvolumen von 20 L und erhitzte die Mischung innerhalb von 4 h auf 270 °C, wobei der Druck in dem Druckbehälter auf 28 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag in Form eines Granulats mit einer Teilchengrößenverteilung von etwa 1 bis 8 mm vor. Die Schüttdichte betrug 110 g/L. Die spezifische Oberfläche betrug 320 m²/g. Der Kohlenstoffgehalt betrug 6 Gew.-%.

### Beispiel 4 (Ethanol, n-Pentan; Volumenverhältnis 1 : 1):

Man gab 2 L des Alkogels aus Herstellungsbeispiel 3 zusammen mit einer Mischung aus 3 L Ethanol und 3 L n-Pentan in einen beheizbaren Druckbehälter aus Edelstahl (RA4) mit innenliegendem Siebkorb und einem Innenvolumen von 20 L und erhitzte die Mischung innerhalb von 4 h auf 220 °C, wobei der Druck in dem Druckbehälter auf 40 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag in Form eines Granulats mit einer Teilchengrößenverteilung von etwa 1 bis 8 mm vor. Die Schüttdichte betrug 130 g/L. Die spezifische Oberfläche betrug 330 m²/g. Der Kohlenstoffgehalt betrug 5 Gew.-%.

### Beispiel 5 (Isopropanol, Ethylenglykol, n-Pentan; Volumenverhältnis 1 : 0,02 : 1):

Man gab 2 L des Alkogels aus Herstellungsbeispiel 3 zusammen mit einer Mischung aus 3 L Isopropanol, 3 L n-Pentan und 60 mL Ethylenglykol in einen beheizbaren Druckbehälter aus Edelstahl (RA4) mit innenliegendem Siebkorb und einem Innenvolumen von 20 L und erhitzte die Mischung innerhalb von 4 h auf 220 °C, wobei der Druck in dem Druckbehälter auf 35 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag in Form eines Granulats mit einer Teilchengrößenverteilung von etwa 1 bis 8 mm vor. Die Schüttdichte betrug 110 g/L. Die spezifische Oberfläche betrug 315 m²/g. Der Kohlenstoffgehalt betrug 6 Gew.-%.

### Beispiel 6 (Isopropanol, n-Pentan; Volumenverhältnis 1 : 1):

Man gab 2 L des Alkogels aus Herstellungsbeispiel 5 zusammen mit einer Mischung aus 3 L Isopropanol und 3 L n-Pentan in einen beheizbaren Druckbehälter aus Edelstahl (RA4) mit innenliegendem Siebkorb und einem Innenvolumen von 20 L und erhitzte die Mischung innerhalb von 4 h auf 220 °C, wobei der Druck in dem Druckbehälter auf 35 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag zu ca. 90 Gew.% in Form eines Granulats mit einer Teilchengrößenverteilung von etwa 1 bis 8 mm vor. Die Schüttdichte betrug 90 g/L. Ca. 10 Gew.-% des Produktes lag als Feinanteil (Pulver) mit leicht erhöhter Schüttdichte vor. Die spezifische Oberfläche betrug 390 m²/g. Der Kohlenstoffgehalt betrug etwa 7 Gew.-%.

### Beispiel 7 (Isopropanol, n-Hexan; Volumenverhältnis 1 : 1):

Man gab 2 L des Alkogels aus Herstellungsbeispiel 5 zusammen mit einer Mischung aus 3 L Isopropanol und 3 L n-Hexan in einen beheizbaren Druckbehälter aus Edelstahl (RA4) mit innenliegendem Siebkorb und einem Innenvolumen von 20 L und erhitzte die Mischung innerhalb von 4 h auf 250 °C, wobei der Druck in dem Druckbehälter auf 30 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag zu ca. 90 Gew.% in Form eines Granulats mit einer Teilchengrößenverteilung von etwa 1 bis 8 mm vor. Die Schüttdichte betrug 85 bis 90 g/L. Ca. 10 Gew.% des Produktes lag als Feinanteil (Pulver) mit leicht erhöhter Schüttdichte vor. Die spezifische Oberfläche betrug 380 m²/g. Der Kohlenstoffgehalt betrug etwa 6 Gew.-%.

### Beispiel 8 (Isopropanol, n-Heptan; Volumenverhältnis 1 : 1):

Man gab 2 L des Alkogels aus Herstellungsbeispiel 5 zusammen mit einer Mischung aus 3 L Isopropanol und 3 L n-Heptan in einen beheizbaren Druckbehälter aus Edelstahl (RA4) mit innenliegendem Siebkorb und einem Innenvolumen von 20 L und erhitzte die Mischung innerhalb von 4 h auf 270 °C, wobei der Druck in dem Druckbehälter auf 28 bar begrenzt wurde. Anschließend wurde innerhalb von 60 min isotherm entspannt. Das abgekühlte Reaktionsprodukt wurde entnommen und etwa 2 h bei 80 °C und 200 mbar nachgetrocknet.

Das erhaltene Aerogel lag zu ca. 93 Gew.% in Form eines Granulats mit einer Teilchengrößenverteilung von etwa 1 bis 8 mm vor. Die Schüttdichte betrug 85 bis 90 g/L. Ca. 7 Gew.% des Produktes lag als Feinanteil (Pulver) mit leicht erhöhter Schüttdichte vor. Die spezifische Oberfläche betrug 370 m²/g. Der Kohlenstoffgehalt betrug etwa 6 Gew.-%.

### Beispiel 9 (Isopropanol, n-Hexan; Volumenverhältnis 5 : 95):

Man gab 500 g der Isopropanol-enthaltenden Siliciumdioxid-Nanopartikel-Agglomerate aus Herstellungsbeispiel 6 mit 2 L einer Mischung von Isopropanol mit n-Hexan (Volumenverhältnis 5 : 95) in einen beheizbaren Druckbehälter aus Edelstahl (RA4) mit innenliegendem Siebkorb und einem Innenvolumen von 20 L. Man erhitzte den Reaktionsansatz innerhalb von 5 h auf 240 °C, wobei der Druck auf 30 bar begrenzt wurde. Danach entspannte man den Reaktionsansatz isotherm innerhalb von 90 min. Man entnahm das abgekühlte Produkt und trocknete es etwa 2 h bei 70 °C und 0,2 bar nach.

Man erhielt oberflächenmodifizierte Siliciumdioxid-Nanopartikel-Agglomerate mit etwa gleichen Abmessungen wie die nicht-modifizierten Siliciumdioxid-Nanopartikel-Agglomerate. Die Schüttdichte der erhaltenen Agglomerate betrug etwa 100 g/L. Die spezifische Oberfläche der Agglomerate betrug etwa 400 bis 500 m²/g. Der Kohlenstoffgehalt der Agglomerate betrug etwa 2,5 Gew.-%. Das entstandene Produkt war hydrophob mit einem Kontaktwinkel von ca. 120°.

## Patentansprüche

1. Verfahren zur Herstellung von porösen oder feinteiligen, festen anorganischen Materialien, deren Oberfläche mit wenigstens einer organischen Substanz modifiziert ist, umfassend eine Behandlung mit einer organischen Flüssigkeit unter überkritischen Bedingungen, wobei die organische Flüssigkeit eine Mischung ist aus wenigstens einer reaktiven organischen Substanz, welche mit den Atomen des anorganischen Materials unter Ausbildung einer chemischen Bindung reagieren kann und die ausgewählt ist unter C₁-C₆-Alkanolen, C₁-C₆-Alkancarbonsäuren, C₂-C₆-Alkanpolycarbonsäuren, C₂-C₆-Alkanpolyolen, C₂-C₄-Alkylencarbonaten und deren Mischungen, und wenigstens einer inerten organischen Substanz, wobei die Mischung einen kritischen Punkt aufweist, der bei geringerer Temperatur und/oder geringerem Druck als der kritische Punkt der reaktiven organischen Substanz liegt und wobei das feste anorganische Material ausgewählt ist unter Metalloxiden und Halbmetalloxiden.

2. Verfahren nach Anspruch 1, umfassend die folgenden Schritte:
a) Bereitstellung eines Hydrogels des anorganischen Materials,
b) Entfernen des Wassers durch Behandeln des Hydrogels mit einer wasserfreien organischen Flüssigkeit, die bei 20°C mit Wasser keine Mischungslücke aufweist, und
c) Trocknen des behandelten Hydrogels unter überkritischen Bedingungen in Gegenwart einer organischen Flüssigkeit, bei der es sich um eine Mischung aus der wenigstens einen reaktiven organischen Substanz und der wenigstens einen inerten organischen Substanz gemäß Anspruch 1 handelt.

3. Verfahren nach Anspruch 2, wobei das feste anorganische Material ein Aerogel ist.

4. Verfahren nach einem der Ansprüche 2 oder 3, wobei man vor Entfernen des Wassers das Hydrogel von ionischen Bestandteilen durch Waschen mit Wasser oder verdünnten wässrigen Lösungen anorganischer Basen befreit.

5. Verfahren nach einem der Ansprüche 2 bis 4, wobei das Entfernen des Wassers durch Behandeln des Hydrogels mit der wasserfreien organischen Flüssigkeit in Schritt b) bei unterkritischen Bedingungen erfolgt.

6. Verfahren nach Anspruch 1, umfassend die folgenden Schritte:
a') Bereitstellung eines feinteiligen, festen anorganischen Materials mit unmodifizierter Oberfläche und
b') Behandeln des in Schritt a') bereitgestellten Materials mit der organischen Flüssigkeit unter überkritischen Bedingungen.

7. Verfahren nach Anspruch 6, wobei das feinteilige, feste anorganische Material ein Gebilde ist, das in wenigstens einer Raumrichtung eine Materialstärke M von maximal 1000 nm, insbesondere im Bereich von 2 bis 500 nm, und als Gesamtgebilde in wenigstens einer Raumrichtung eine Abmessung aufweist, die mindestens das 5-fache, insbesondere das wenigstens 10-fache, der Materialstärke M beträgt.

8. Verfahren nach Anspruch 7, wobei das Gesamtgebilde in wenigstens einer Raumrichtung eine Abmessung im Bereich von 10 µm bis 10 cm aufweist.

9. Verfahren nach einem der Ansprüche 6 bis 8, wobei das feste anorganische Material ausgewählt ist unter
i. Hohlkugeln, deren Kugelschale eine Dicke von maximal 100 nm und insbesondere im Bereich von 2 bis 50 nm aufweist und deren Verhältnis von Kugeldurchmesser zu Dicke der Kugelschale wenigstens 5 beträgt;
ii. Fasern mit einer Faserdicke von maximal 1000 nm, insbesondere 50 bis 500 nm, und einem Aspekt-Verhältnis von wenigstens 50, insbesondere wenigstens 100;
iii. Plättchen mit einer Dicke von maximal 100 nm und einem Verhältnis von Durchmesser zu Dicke von wenigstens 5, insbesondere wenigstens 10; und
iv. Agglomeraten von Partikeln, die einen mittleren Partikeldurchmesser von maximal 100 nm, insbesondere 2 bis 80 nm, aufweisen, wobei der Volumenanteil des anorganischen Materials, bezogen auf das Gesamtvolumen des Agglomerats, im Bereich von 1 bis 20 Vol.-% liegt.

10. Verfahren nach einem der vorhergehenden Ansprüche, wobei das feste anorganische Material als Hauptkomponente wenigstens ein Oxid aus der Gruppe Siliciumdioxid, Zinkoxid, Zinn(IV)-oxid, Titan(IV)-oxid und Aluminiumoxid in einer Menge von 90 bis 100 Gew.-%, bezogen auf das Gesamtgewicht des festen anorganischen Materials, enthält.

11. Verfahren nach einem der vorhergehenden Ansprüche, wobei die reaktive organische Substanz ausgewählt ist unter C₁-C₄-Alkanolen, Mischungen wenigstens zweier C₁-C₄-Alkanole und Mischungen wenigstens eines C₁-C₄-Alkanols mit wenigstens einer weiteren reaktiven organischen Substanz, die unter C₂-C₆-Alkanpolyolen, C₂-C₄-Alkylencarbonaten und C₂-C₆-Alkanpolycarbonsäuren ausgewählt ist.

12. Verfahren nach einem der vorhergehenden Ansprüche, wobei die inerte organische Substanz eine kritische Temperatur im Bereich von 20 bis 300 °C, insbesondere im Bereich von 100 bis 250 °C, aufweist.

13. Verfahren nach einem der vorhergehenden Ansprüche, wobei die inerte organische Substanz einen kritischen Druck im Bereich von 20 bis 80 bar, insbesondere im Bereich von 20 bis 50 bar, aufweist.

14. Verfahren nach einem der vorhergehenden Ansprüche, wobei die inerte organische Substanz ausgewählt ist unter C₁-C₈-Alkanen, C₂-C₈-Alkenen, Dialkylethern mit einer Gesamtkohlenstoffzahl im Bereich von 2 bis 6, C₃-C₄-Ketonen, Dichlormethan und deren Mischungen.

15. Verfahren nach einem der vorhergehenden Ansprüche, wobei die inerte organische Substanz ein C₃-C₈-Alkan, insbesondere n-Pentan, n-Hexan oder n-Heptan, ist und die reaktive organische Substanz ein C₂-C₄-Alkanol, insbesondere Isopropanol, ist.

16. Verfahren nach einem der vorhergehenden Ansprüche, wobei die Behandlung mit der organischen Flüssigkeit bei einer Temperatur von maximal 40 °C oberhalb der kritischen Temperatur der organischen Flüssigkeit erfolgt.

## Claims

1. A process for producing porous or finely divided solid inorganic materials, the surface of which has been modified with at least one organic substance, comprising a treatment with an organic liquid under supercritical conditions, the organic liquid being a mixture of at least one reactive organic substance which can react with the atoms of the inorganic material to form a chemical bond and which is selected from C₁-C₆-alkanols, C₁-C₆-alkanecarboxylic acids, C₂-C₆-alkanepolycarboxylic acids, C₂-C₆-alkanepolyols, C₂-C₄-alkylene carbonates, and mixtures thereof, and at least one inert organic substance, wherein the mixture has a critical point which is at lower temperature and/or lower pressure than the critical point of the reactive organic substance and wherein the solid inorganic material is selected from metal oxides and semimetal oxides.

2. The process according to claim 1, comprising the following steps:
a) providing a hydrogel of the inorganic material,
b) removing the water by treating the hydrogel with an anhydrous organic liquid which at 20°C has no miscibility gap with water, and
c) drying the treated hydrogel under supercritical conditions in the presence of an organic liquid which is a mixture of the at least one reactive organic substance and the at least one inert organic substance according to claim 1.

3. The process according to claim 2, wherein the solid inorganic material is an aerogel.

4. The process according to any of claims 2 or 3, wherein removal of the water is preceded by freeing the hydrogel of ionic constituents by washing with water or dilute aqueous solutions of inorganic bases.

5. The process according to any of claims 2 to 4, wherein the water is removed by treating the hydrogel with the anhydrous organic liquid in step b) under subcritical conditions.

6. The process according to claim 1, comprising the following steps:
a') providing a finely divided solid inorganic material having an unmodified surface and
b') treating the material provided in step a') with the organic liquid under supercritical conditions.

7. The process according to claim 6, wherein the finely divided solid inorganic material is a structure which, in at least one spatial direction, has a material thickness M of not more than 1000 nm, especially in the range from 2 to 500 nm, and as an overall structure has, in at least one spatial direction, a dimension which is at least 5 times, especially at least 10 times, the material thickness M.

8. The process according to claim 7, wherein the overall structure has, in at least one spatial direction, a dimension in the range from 10 µm to 10 cm.

9. The process according to any of claims 6 to 8, wherein the solid inorganic material is selected from
i. hollow spheres, the sphere shell of which has a thickness of not more than 100 nm and especially in the range from 2 to 50 nm and whose ratio of sphere diameter to thickness of the sphere shell is at least 5;
ii. fibers having a fiber thickness of not more than 1000 nm, especially 50 to 500 nm, and an aspect ratio of at least 50, especially at least 100;
iii. platelets having a thickness of not more than 100 nm and a ratio of diameter to thickness of at least 5, especially at least 10; and
iv. agglomerates of particles having a mean particle diameter of not more than 100 nm, especially 2 to 80 nm, the proportion by volume of the inorganic material, based on the total volume of the agglomerate, being in the range from 1 to 20% by volume.

10. The process according to any of the preceding claims, wherein the solid inorganic material comprises, as the main component, at least one oxide from the group of silicon dioxide, zinc oxide, tin(IV) oxide, titanium(IV) oxide and aluminum oxide in an amount of 90 to 100% by weight, based on the total weight of the solid inorganic material.

11. The process according to any of the preceding claims, wherein the reactive organic substance is selected from C₁-C₄-alkanols, mixtures of at least two C₁-C₄-alkanols and mixtures of at least one C₁-C₄-alkanol with at least one further reactive organic substance selected from C₂-C₆-alkanepolyols, C₂-C₄-alkylene carbonates and C₂-C₆-alkanepolycarboxylic acids.

12. The process according to any of the preceding claims, wherein the inert organic substance has a critical temperature in the range from 20 to 300°C, especially in the range from 100 to 250°C.

13. The process according to any of the preceding claims, wherein the inert organic substance has a critical pressure in the range from 20 to 80 bar, especially in the range from 20 to 50 bar.

14. The process according to any of the preceding claims, wherein the inert organic substance is selected from C₁-C₈-alkanes, C₂-C₈-alkenes, dialkyl ethers having a total carbon number in the range from 2 to 6, C₃-C₄ ketones, dichloromethane and mixtures thereof.

15. The process according to any of the preceding claims, wherein the inert organic substance is a C₃-C₈-alkane, especially n-pentane, n-hexane or n-heptane, and the reactive organic substance is a C₂-C₄-alkanol, especially isopropanol.

16. The process according to any of the preceding claims, wherein the treatment with the organic liquid is effected at a temperature of not more than 40°C above the critical temperature of the organic liquid.

## Revendications

1. Procédé de fabrication de matériaux inorganiques solides poreux ou finement divisés, dont la surface est modifiée avec au moins une substance organique, comprenant un traitement avec un liquide organique dans des conditions supercritiques, le liquide organique étant un mélange d'au moins une substance organique réactive, qui peut réagir avec les atomes du matériau inorganique avec formation d'une liaison chimique et qui est choisie parmi les alcanols en C₁-C₆, les acides alcane-carboxyliques en C₁-C₆, les acides alcane-polycarboxyliques en C₂-C₆, les alcane-polyols en C₂-C₆, les carbonates d'alkylène en C₂-C₄ et leurs mélanges, et d'au moins une substance organique inerte, le mélange présentant un point critique qui se situe à une température plus basse et/ou à une pression plus basse que le point critique de la substance organique réactive, et le matériau inorganique solide étant choisi parmi les oxydes de métaux et les oxydes de semi-métaux.

2. Procédé selon la revendication 1, comprenant les étapes suivantes :
a) la préparation d'un hydrogel du matériau inorganique,
b) l'élimination de l'eau par traitement de l'hydrogel avec un liquide organique anhydre, qui ne présente pas de lacune de miscibilité avec l'eau à 20 °C, et
c) le séchage de l'hydrogel traité dans des conditions supercritiques en présence d'un liquide organique, qui consiste en un mélange de ladite au moins une substance organique réactive et de ladite au moins une substance organique inerte selon la revendication 1.

3. Procédé selon la revendication 2, dans lequel le matériau inorganique solide est un aérogel.

4. Procédé selon l'une quelconque des revendications 2 ou 3, dans lequel, avant l'élimination de l'eau, l'hydrogel est débarrassé des constituants ioniques par lavage avec de l'eau ou des solutions aqueuses diluées de bases inorganiques.

5. Procédé selon l'une quelconque des revendications 2 à 4, dans lequel l'élimination de l'eau a lieu par traitement de l'hydrogel avec le liquide organique anhydre à l'étape b) dans des conditions sous-critiques.

6. Procédé selon la revendication 1, comprenant les étapes suivantes :
a') la préparation d'un matériau inorganique solide finement divisé à surface non modifiée, et
b') le traitement du matériau préparé à l'étape a') avec le liquide organique dans des conditions supercritiques.

7. Procédé selon la revendication 6, dans lequel le matériau inorganique solide finement divisé est une structure qui présente dans au moins une direction de l'espace une épaisseur de matériau M d'au plus 1 000 nm, notamment dans la plage allant de 2 à 500 nm, et qui présente en tant que structure totale une dimension dans au moins une direction de l'espace qui est d'au moins 5 fois, notamment d'au moins 10 fois, l'épaisseur de matériau M.

8. Procédé selon la revendication 7, dans lequel la structure totale présente dans au moins une direction de l'espace une dimension dans la plage allant de 10 µm à 10 cm.

9. Procédé selon l'une quelconque des revendications 6 à 8, dans lequel le matériau inorganique solide est choisi parmi :
i. les billes creuses, dont l'enveloppe sphérique présente une épaisseur d'au plus 100 nm et notamment dans la plage allant de 2 à 50 nm, et dont le rapport entre le diamètre de bille et l'épaisseur de l'enveloppe sphérique est d'au moins 5 ;
ii. les fibres ayant une épaisseur de fibre d'au plus 1 000 nm, notamment de 50 à 500 nm, et un rapport de longueur d'au moins 50, notamment d'au moins 100 ;
iii. les plaquettes ayant une épaisseur d'au plus 100 nm et un rapport entre le diamètre et l'épaisseur d'au moins 5, notamment d'au moins 10 ; et
iv. les agglomérats de particules, qui présentent un diamètre de particule moyen d'au plus 100 nm, notamment de 2 à 80 nm, la proportion en volume du matériau inorganique, par rapport au volume total de l'agglomérat, se situant dans la plage allant de 1 à 20 % en volume.

10. Procédé selon l'une quelconque des revendications précédentes, dans lequel le matériau inorganique solide contient en tant que composant principal au moins un oxyde du groupe constitué par le dioxyde de silicium, l'oxyde de zinc, l'oxyde d'étain (IV), l'oxyde de titane (IV) et l'oxyde d'aluminium en une quantité de 90 à 100 % en poids, par rapport au poids total du matériau inorganique solide.

11. Procédé selon l'une quelconque des revendications précédentes, dans lequel la substance organique réactive est choisie parmi les alcanols en C₁-C₄, les mélanges d'au moins deux alcanols en C₁-C₄ et les mélanges d'au moins un alcanol en C₁-C₄ avec au moins une autre substance organique réactive qui est choisie parmi les alcane-polyols en C₂-C₆, les carbonates d'alkylène en C₂-C₄ et les acides alcane-polycarboxyliques en C₂-C₆.

12. Procédé selon l'une quelconque des revendications précédentes, dans lequel la substance organique inerte présente une température critique dans la plage allant de 20 à 300 °C, notamment dans la plage allant de 100 à 250 °C.

13. Procédé selon l'une quelconque des revendications précédentes, dans lequel la substance organique inerte présente une pression critique dans la plage allant de 20 à 80 bar, notamment dans la plage allant de 20 à 50 bar.

14. Procédé selon l'une quelconque des revendications précédentes, dans lequel la substance organique inerte est choisie parmi les alcanes en C₁-C₈, les alcènes en C₂-C₈, les éthers dialkyliques ayant un nombre total de carbones dans la plage allant de 2 à 6, les cétones en C₃-C₄, le dichlorométhane et leurs mélanges.

15. Procédé selon l'une quelconque des revendications précédentes, dans lequel la substance organique inerte est un alcane en C₃-C₈, notamment le n-pentane, le n-hexane ou le n-heptane, et la substance organique réactive est un alcanol en C₂-C₄, notamment l'isopropanol.

16. Procédé selon l'une quelconque des revendications précédentes, dans lequel le traitement avec le liquide organique a lieu à une température d'au plus 40 °C au-dessus de la température critique du liquide organique.
